# EUROPEAN PATENT SPECIFICATION

(11) **EP 3 210 445 B1**
(45) Date of publication and mention of the grant of the patent: **20.03.2019**
(21) Application number: 17157943.6
(22) Date of filing: 24.02.2017
(51) Int. Cl.: A01B 49/06, A01C 5/06

(54) **SEEDER**
SÄMASCHINE
SEMEUSE

(30) Priority: 26.02.2016 IT UB20161122
(43) Date of publication of application: 30.08.2017
(73) Proprietor: Pizzocolo, Fabio, 25017 Lonato del Garda (IT)
(72) Inventor: Pizzocolo, Fabio, 25017 Lonato del Garda (IT)
(74) Representative: Modiano, Micaela Nadia

(56) References cited:
- AT-B- 362 176
- DE-U1-202014 105 576
- FR-A1- 2 795 909

## Description

The present invention relates to a seeder.

The seeder is an agricultural implement designed for the regular distribution and optional burying of seeds.

Depending on the manner in which they distribute the seed, and therefore on the sowing system that they allow to provide, seeders are divided into two fundamental categories: broadcast and by rows.

The former are designed often only to spread seeds on the ground soil without burying them.

The latter are designed to deposit and bury the seed along appropriately spaced rows and are sometimes divided into two classes, constituted respectively by ordinary machines for seeding cereals and suitable precision machines.

Seeders can have a mechanical distribution or a pneumatic distribution and are typically constituted by a chassis, provided with wheels, on which at least one hopper for containing the seeds and one or more distribution units associated with the hopper is fitted.

To the rear of the distribution region there are often so-called seed covering devices, whereas at the front it is possible to provide so-called furrowers.

After performing seeding, it is common to perform rolling of the seeded soil.

This rolling is generally performed by using a tractor to the rear of which a roller is associated: this entails an expenditure of time and use of the tractor.

In some cases the seeder is associated or associable with a small roller so as to be able to perform rolling during the seeding operations.

This solution, too, has drawbacks caused by the need to use small rollers (which are not always suitable).

FR2795909 discloses a reviving machine consisting of a base frame, towed by a tractor, carrying a toothed wheel for working the soil, tubular seeders, supplied by a seed distributor and finally a roller to restore the surface. The toothed wheel is mounted to rotate freely on a horizontal transverse shaft. It has a series of triangular teeth, which are inclined towards the rear. As the machine progresses, the teeth penetrate the soil, in front of the wheel axis and lift a small quantity of earth to form a discontinuous slot to receive the seed. The aim of the present invention is to provide a seeder that is capable of eliminating the drawbacks noted above.

Within the scope of this aim, an object of the present invention is to provide a seeder that allows to perform seeding and rolling of the soil in significantly reduced times.

Another object of the present invention is to devise a seeder that has a very simple structure and has a competitive production cost, so that its use is advantageous also from the economic standpoint.

This aim, as well as these and other objects which will become better apparent hereinafter, are achieved by a seeder according to what is indicated in the appended independent claims.

Further characteristics and advantages of the invention will become better apparent from the description of a preferred but not exclusive embodiment of a seeder according to the present invention, illustrated by way of non-limiting example in the accompanying drawing, wherein:

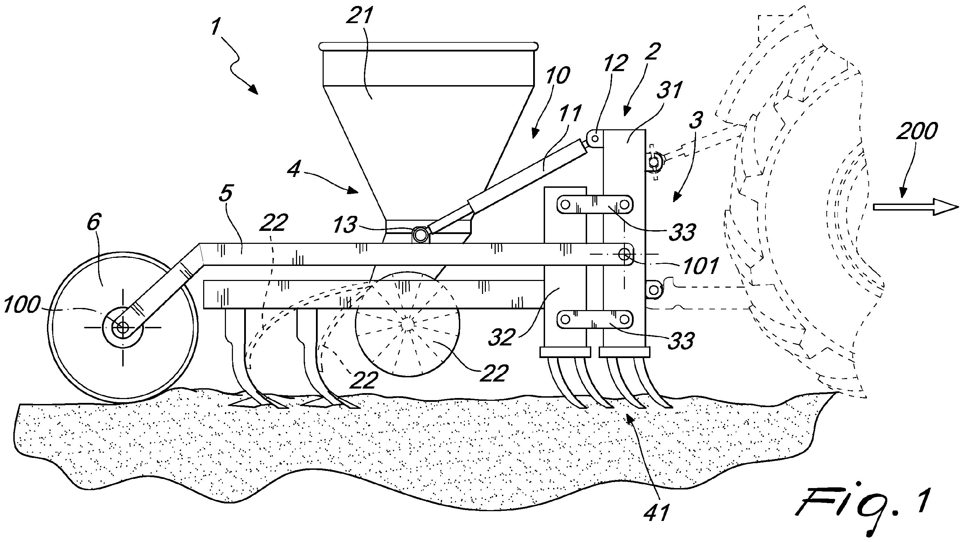

Figure 1 is a lateral elevation view of a practical embodiment of a seeder according to the invention.

In the exemplary embodiments that follow, individual characteristics, given in relation to specific examples, may actually be interchanged with other different characteristics that exist in other exemplary embodiments.

With reference to the figure, the present invention relates to a seeder, designated generally by the reference numeral 1.

The seeder 1 comprises a supporting structure 2 which can be associated detachably with a lifting device 3 that is formed at the rear region of an agricultural tractor, advantageously constituted by a tractor.

The supporting structure 2 supports an apparatus for distributing seeds 4. The supporting structure 2 supports further a supporting frame 5 for at least one presser roller 6, which during use is arranged to the rear of the seed distribution apparatus 4.

The presser roller 6 can rotate with respect to the supporting frame 5 about a rotation axis 100.

Advantageously, the rotation axis 100 is arranged substantially transversely to the advancement direction 200 of the tractor.

According to the present invention, the seeder 1 is provided with a device 10 for moving the supporting frame 5 with respect to the supporting structure 2 in order to adjust the pressure of the presser roller 6 on the ground.

The presser roller 6 can be metallic, either solid or hollow, fitted with rubber and/or made of any material and having any shape suitable for the purpose.

Advantageously, the supporting frame 5 is articulated to the supporting structure 2 in order to allow its rotation about an articulation axis 101.

Conveniently, the articulation axis 101 is substantially parallel to the rotation axis 100 of the presser roller 6.

Conveniently, the movement device 10 comprises, for example, at least one hydraulic actuator 11, which acts between a first abutment body 12, which is integral with the supporting structure 2, and a second abutment body 13, which is integral with the supporting frame 5.

The hydraulic actuator 11 is functionally connected to a remote control device, which is arranged advantageously proximate to the cab of the tractor.

Conveniently, the presser roller 6 is mounted so that it is free about the rotation axis 100 on a coupling body that is supported by the supporting frame 5.

The seed distribution apparatus 4 comprises at least one containment hopper 21 and at least one distribution device 22.

The supporting structure 2 has a first supporting element 31, which is designed to be associated detachably with the lifting device 3 formed at the rear region of an agricultural tractor, and a second supporting element 32 of the seed distribution apparatus 4.

Between the first supporting element 31 and the second supporting element 32 there are kinematic connection means 33, which are adapted to allow a relative motion of the second supporting element 32 (and therefore of the seed distribution apparatus 4) with respect to the first supporting element 31 along a movement direction that has a component that is perpendicular to the ground.

In this regard, it is appropriate to provide that the kinematic connection means 33 comprise at least one first and one second interconnection linkage.

Preferably, the kinematic connection means 33 comprise a first interconnection linkage and a second interconnection linkage which are arranged at each lateral side.

It is also possible to provide for the kinematic connection means 33 to comprise one or more linkages arranged at each lateral side and one or more linkages arranged in an intermediate position, in a transverse direction, between the lateral sides.

In this manner, the second supporting element 32, which supports the seed distribution apparatus 4, floats with respect to the first supporting element 31.

Advantageously, the device 10 for moving the supporting frame 5 with respect to the supporting structure 2 acts between the first supporting element 31 and the supporting frame 5.

In particular, the supporting frame 5 is articulated to the first supporting element 31 and the hydraulic actuator or actuators 11 acts or act between a first abutment body 12, which is integral with the first supporting element 31, and a second abutment body 13, which is integral with the supporting frame 5.

The seeder 1 is provided, in front of the distribution device 22, with a soil preparing device 41.

The soil preparing device 41 comprises, for example, a device with springs, teeth, toothed rollers, rollers with round rods, rollers with flat rods, etc.

Preferably, the soil preparing device 41 is supported directly by the first supporting element 31.

The supporting structure 2 can also be associated, to the rear of the distribution device 22, with a seed covering device.

The supporting frame 5 can be associated, optionally detachably, with a device for providing the irrigation furrows that is designed to be arranged to the rear with respect to the presser roller 6.

Furthermore, the supporting element 31 is provided with a coupling element which can be or is associated with a first end of a traction body, which can be connected, at the end that lies opposite the first end, to the rear tow hook.

The traction body can comprise a hydraulic actuator which is adapted to discharge the stresses from the supporting element 31 to the tow hook.

The present invention also relates to a supporting frame 5 for the presser roller 6, which can be associated rotatably with a supporting structure 2 of a seeder 1 of the classic type (new or used).

In this case also, the supporting frame 5 supports rotatably, about a rotation axis 100, a presser roller 6 designed to be arranged, during use, to the rear of a seed distribution apparatus 4.

The supporting frame 5 can further be associated with at least one device 10 for moving the supporting frame 5 with respect to the supporting structure 2 in order to adjust the pressure of the presser roller 6 on the soil.

The use of a seeder according to the invention is evident from what has been described above.

The disengagement of the support of the seed distribution apparatus 4 from the presser roller 6 allows to manage independently the pressure of the presser roller 6 on the soil with respect to the position of the seed distribution apparatus 4.

The invention thus conceived is susceptible of numerous modifications and variations, all of which are within the scope of the appended claims.

In practice it has been found that in all the embodiments the invention has achieved its intended aim and objects.

In particular, the use of the seeder according to the invention allows to perform rolling simultaneously with seeding, with an evident saving from the point of view of time and of use of the agricultural tractor.

In practice, the materials used, as well as the contingent shapes and dimensions, may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A seeder (1) comprising a supporting structure (2) detachably associable with a lifting device formed at the rear region of an agricultural tractor, said supporting structure (2) supporting an apparatus for the distribution of seeds (4), said supporting structure (2) supporting a frame (5) for supporting at least one presser roller (6) that can rotate with respect to said supporting frame (5) about a rotation axis (100) and is arranged, during use, in the rear region with respect to said apparatus for the distribution of seeds (4), at least one device (10) for moving said supporting frame (5) with respect to said supporting structure (2) being provided in order to adjust the pressure of said presser roller (6) on the ground, **characterized in that** said supporting structure (2) is provided with a first supporting element (31), designed to be associated detachably with said lifting device provided at the rear region of an agricultural tractor, and a second supporting element (32) of said apparatus for the distribution of seeds (4), between said first supporting element (31) and said second supporting element (32) there being kinematic connection means (33) adapted to allow a relative motion of said second supporting element (32) with respect to said first supporting element (31) along a movement direction that has a component that is perpendicular to the ground, said supporting frame (5) being articulated to said supporting structure (2) in order to allow its rotation about an articulation axis (101) that is substantially parallel to the rotation axis (100) of said presser roller (6), said device (10) for moving said supporting frame (5) with respect to said supporting structure (2) acting between said first supporting element (31) and said supporting frame (5).

2. The seeder (1) according to claim 1, **characterized in that** said movement device (10) comprises at least one hydraulic actuator (11) that acts between a first abutment body (12), which is integral with said supporting structure (2), and a second abutment body (13), which is integral with said supporting frame (5).

3. The seeder (1) according to one or more of the preceding claims, **characterized in that** said at least one hydraulic actuator (11) is functionally connected to a remote control element.

4. The seeder (1) according to one or more of the preceding claims, **characterized in that** said apparatus for distributing seeds (4) comprises at least one containment hopper (21) and at least one distribution device (22).

5. The seeder (1) according to one or more of the preceding claims, **characterized in that** said kinematic connection means (33) comprise at least one first and one second interconnection linkage.

6. The seeder (1) according to one or more of the preceding claims, **characterized in that** it comprises, in front of said distribution device (22), a soil preparing device (41) supported directly by said first supporting element (31).

## Patentansprüche

1. Eine Sämaschine (1), die eine tragende Struktur (2) umfasst, welche lösbar mit einer Hubvorrichtung verbindbar ist, geformt in einem hinteren Bereich eines Ackerschleppers, wobei die tragende Struktur (2) eine Vorrichtung zum Verteilen von Samen (4) trägt; wobei die tragende Struktur (2) einen Rahmen (5) zum Tragen mindestens einer Druckwalze (6) trägt, die sich mit Bezug auf den Tragrahmen (5) um eine Drehachse (100) drehen kann und sich im Gebrauch im hinteren Bereich mit Bezug auf die Vorrichtung zum Verteilen von Samen (4) befindet; wobei mindestens eine Vorrichtung (10) zum Bewegen des Tragrahmens (5) im Verhältnis zu der tragenden Struktur (2) bereitgestellt ist, um den Druck der Druckwalze (6) auf den Boden einzustellen; **dadurch gekennzeichnet, dass** die tragende Struktur (2) mit einem ersten tragenden Element (31) ausgestattet ist, konstruiert, um lösbar mit der Hubvorrichtung verbunden zu werden, die im hinteren Bereich eines Ackerschleppers angebracht ist, und einem zweiten tragenden Element (32) der Vorrichtung zum Verteilen von Samen (4); wobei sich zwischen dem ersten tragenden Element (31) und dem zweiten tragenden Element (32) kinematische Verbindungsmittel (33) befinden, ausgebildet, um eine Relativbewegung des zweiten tragenden Elements (32) im Verhältnis zu dem ersten tragenden Element (31) entlang einer Bewegungsrichtung zu ermöglichen, die eine Komponente hat, welche senkrecht zum Boden ist; wobei der Tragrahmen (5) gelenkig mit der tragenden Struktur (2) verbunden ist, um ihre Drehung um eine Gelenkachse (101) zu ermöglichen, die im Wesentlichen parallel zur Drehachse (100) der Druckwalze (6) ist; wobei die Vorrichtung (10) zum Bewegen des Tragrahmens (5) im Verhältnis zu der tragenden Struktur (2) zwischen dem ersten tragenden Element (31) und dem Tragrahmen (5) arbeitet.

2. Die Sämaschine (1) gemäß Anspruch 1, **dadurch gekennzeichnet, dass** die Bewegungsvorrichtung (10) mindestens einen Hydraulikantrieb (11) umfasst, der zwischen einem ersten Widerlagerkörper (12), welcher integral mit der tragenden Struktur (2) ist, und einem zweiten Widerlagerkörper (13) arbeitet, der integral mit dem Tragrahmen (5) ist.

3. Die Sämaschine (1) gemäß einem oder mehreren der obigen Ansprüche, **dadurch gekennzeichnet, dass** der mindestens eine Hydraulikantrieb (11) funktionell mit einem Fernsteuerungselement verbunden ist.

4. Die Sämaschine (1) gemäß einem oder mehreren der obigen Ansprüche, **dadurch gekennzeichnet, dass** die Vorrichtung zum Verteilen von Samen (4) mindestens einen Aufnahmetrichter (21) und mindestens eine Verteilvorrichtung (22) umfasst.

5. Die Sämaschine (1) gemäß einem oder mehreren der obigen Ansprüche, **dadurch gekennzeichnet, dass** die kinematischen Verbindungsmittel (33) mindestens ein erstes und ein zweites Verbindungsglied umfassen.

6. Die Sämaschine (1) gemäß einem oder mehreren der obigen Ansprüche, **dadurch gekennzeichnet, dass** sie vor der Verteilvorrichtung (22) eine Bodenvorbereitungsvorrichtung (41) umfasst, die direkt von dem ersten tragenden Element (31) getragen wird.

## Revendications

1. Semoir (1) comportant une structure de support (2) pouvant être associée de manière détachable à un dispositif de levage formé au niveau de la zone arrière d'un tracteur agricole, ladite structure de support (2) supportant un appareil de distribution de graines (4), ladite structure de support (2) supportant un châssis (5) pour supporter au moins un rouleau presseur (6) qui peut tourner par rapport audit châssis de support (5) autour d'un axe de rotation (100) et est agencé, pendant l'utilisation, dans la zone arrière par rapport audit appareil de distribution de graines (4), au moins un dispositif (10) pour déplacer ledit châssis de support (5) par rapport à ladite structure de support (2) étant prévu afin de régler la pression dudit rouleau presseur (6) sur le sol, **caractérisé en ce que** ladite structure support (2) est pourvue d'un premier élément de support (31), conçu pour être associé de manière détachable audit dispositif de levage agencé au niveau de la zone arrière d'un tracteur agricole, et d'un second élément de support (32) dudit appareil de distribution de graines (4), entre ledit premier élément de support (31) et ledit second élément de support (32) étant prévus des moyens de liaison cinématique (33) adaptés pour permettre un mouvement relatif dudit second élément de support (32) par rapport audit premier élément de support (31) le long d'une direction de déplacement qui a une composante qui est perpendiculaire au sol, ledit châssis de support (5) étant articulé à ladite structure de support (2) afin de permettre sa rotation autour d'un axe d'articulation (101) qui est sensiblement parallèle à l'axe de rotation (100) dudit rouleau presseur (6), ledit dispositif (10) pour déplacer ledit châssis de support (5) par rapport à ladite structure de support (2) agissant entre ledit premier élément de support (31) et ledit châssis de support (5) .

2. Semoir (1) selon la revendication 1, **caractérisé en ce que** ledit dispositif de mouvement (10) comporte au moins un vérin hydraulique (11) qui agit entre un premier corps de butée (12), qui est solidaire de ladite structure de support (2), et un second corps de butée (13), qui est solidaire dudit châssis de support (5).

3. Semoir (1) selon une ou plusieurs des revendications précédentes, **caractérisé en ce que** ledit au moins un vérin hydraulique (11) est fonctionnellement relié à un élément de commande à distance.

4. Semoir (1) selon une ou plusieurs des revendications précédentes, **caractérisé en ce que** ledit appareil de distribution de graines (4) comporte au moins une trémie de confinement (21) et au moins un dispositif de distribution (22).

5. Semoir (1) selon une ou plusieurs des revendications précédentes, **caractérisé en ce que** lesdits moyens de liaison cinématique (33) comportent au moins une première et une seconde tringlerie d'interconnexion.

6. Semoir (1) selon une ou plusieurs des revendications précédentes, **caractérisé en ce qu'**il comporte, à l'avant dudit dispositif de distribution (22), un dispositif de préparation du sol (41) directement supporté par ledit premier élément de support (31).
